# EUROPÄISCHE PATENTSCHRIFT

(11) **EP 4 330 056 B1**
(45) Veröffentlichungstag und Bekanntmachung des Hinweises auf die Patenterteilung: **16.04.2025**
(21) Anmeldenummer: 21851660.7
(22) Anmeldetag: 03.12.2021
(51) Int. Cl.: B60C 9/06, B60C 15/00, B60C 9/10, B60C 9/09, B60C 9/11

(54) **ZWEIRADLUFTREIFEN AUFWEISEND EINE SCHUTZLAGE**
PNEUMATIC TYRE FOR A TWO-WHEELED VEHICLE HAVING A PROTECTIVE LAYER
PNEUMATIQUE POUR UN VÉHICULE À DEUX ROUES AYANT UNE COUCHE DE PROTECTION

(30) Priorität: 29.04.2021 DE 102021204315
(43) Veröffentlichungstag der Anmeldung: 06.03.2024
(73) Patentinhaber: Continental Reifen Deutschland GmbH, 30175 Hannover (DE)
(72) Erfinder: LENGEMANN, Daniel, 30165 Hannover (DE); SCHMIDT, Andre, 30165 Hannover (DE); VOSS, Jan-Niklas, 30165 Hannover (DE); ZIPF, Artur, 30165 Hannover (DE); EDER, Jan Martin, 30165 Hannover (DE)
(74) Vertreter: Continental Corporation
(86) Internationale Anmeldenummer: PCT/DE2021/200238
(87) Internationale Veröffentlichungsnummer: WO 2022/228595

(56) Entgegenhaltungen:
- WO-A1-2021/024215
- DE-A1- 19 909 648
- DE-U1- 202012 007 834
- DE-U1- 202012 007 834
- DE-U1- 29 509 996
- DE-U1- 29 509 996
- US-A1- 2018 304 690

## Beschreibung

Die Erfindung betrifft einen Zweiradluftreifen, bevorzugt Fahrradreifen, besonders bevorzugt Rennradreifen oder Mountain-Bike Reifen, mit einem Laufstreifen, einer Reifenkarkasse, Reifenseitenwänden und in einer jeden axialen Hälfte des Reifens einem Wulstbereich mit einem Reifenwulst mit einem Kern wobei der Zweiradluftreifen in den Wulstbereichen eine axial außerhalb der Karkasse angeordnete Schutzlage mit in Gummimaterial eingebetteten Festigkeitsträgern aufweist, wobei die Reifenkarkasse aus einer ersten Karkasseinlage und einer zweiten Karkasseinlage jeweils aufweisend Festigkeitsträger gebildet ist, wobei die zweite Karkasseinlage in einem Zenit des Zweiradluftreifens radial innerhalb der ersten Karkasseinlage angeordnet ist und sich vom Zenit des Zweiradluftreifens über die Reifenseitenwände bis in beide Wulstbereiche erstreckt und dort den jeweiligen Kern von axial innen nach axial außen umschlingt und in einem zweiten Karkasseinlagenende radial innerhalb eines Laufstreifenendes des Laufstreifens endet und wobei sich die erste Karkasseinlage vom Zenit des Zweiradluftreifens über die Reifenseitenwände bis in beide Wulstbereiche erstreckt und dort den jeweiligen Kern von axial innen nach axial außen umschlingt.

Herkömmliche Zweiradluftreifen, bevorzugt Fahrradreifen, besonders bevorzugt Rennradreifen und/oder Mountain-Bike Reifen, sind auf Rollwiderstand, Pannenschutz und Laufleistung ausgelegt und optimiert. Diese Eigenschaften stehen teilweise miteinander in einem Zielkonflikt.

So offenbart die EP 3174738 A1 einen Rennradreifen mit einer zweilagigen Karkasse, wobei Hochschläge beider Karkasslagen die Seitenwände zum Großteil abdecken. Ein solcher Reifen weist in zumindest einem Teil der Seitenwand eine Verstärkung durch vier Lagenstärken der Karkasse auf. Die Konstruktion ermöglicht einen hohen Schnittschutz der Seitenwand. Jedoch wirkt sich der im Bereich der Seitenwand hohe Einsatz an Karkassmaterial negativ auf das Gewicht und den Rollwiderstand aus.

Eine typische Konstruktion mit einer einlagigen Karkasse zeichnet sich dadurch aus, dass die Hochschläge der Karkasseinlage bis in den Reifenzenit reichen und unter dem Laufstreifen einander überlappend enden. Eine solche Konstruktion ist einfach in der Herstellung, weist aber eine geringere Schnittfestigkeit der Seitenwand und damit eine geringere Pannensicherheit in der Seitenwand auf.

Die DE 202020104281 U1 offenbart einen Reifen mit einer zweilagigen Karkasse, wobei die Karkasshochschläge beider Karkasslagen bereits im Wulstbereich unter einem Wulstschutzband enden. Ein solcher Reifen ist bezüglich Rollwiderstand optimiert, weist jedoch einen geringen Pannenschutz auf.

Ein gattungsgemäßer Zweiradluftreifen ist aus der DE202012007834U bekannt.

Weitere Zweiradluftreifen werden in DE19909648 A1 sowie WO2021024215 A1 gezeigt.

Bei Schlauchlosreifen ist neben der Dichtigkeit an sich auch der Durchschlagsschutz im Bereich der Seitenwand von besonderer Bedeutung, da derartige Pannen bei Einsatz einer Dichtmilch meist durch die Dichtmilch nicht repariert werden können.

Der Erfindung liegt die Aufgabe zu Grunde, einen Zweiradluftreifen, bevorzugt einen Fahrradreifen, besonders bevorzugt einen Rennradreifen und/oder einen Mountain-Bike Reifen, zu Verfügung zu stellen, bei dem die Pannensicherheit und der Durchschlagsschutz bei gutem Rollwiderstand und guter Dichtigkeit verbessert sind.

Gelöst wird die Aufgabe durch einen Zweiradluftreifen nach Anspruch 1.

Ein Vorteil des erfindungsgemäßen Zweiradluftreifens, bevorzugt des Fahrradreifens, besonders bevorzugt des Rennradreifens und/oder des Mountain-Bike Reifens, ist darin zu sehen, dass durch die neue Reifenkonstruktion die Pannensicherheit und der Durchschlagsschutz wesentlich verbessert sind. Gleichzeitig weist der Reifen einen guten Rollwiderstand und eine hohe Dichtigkeit auf.

Erfindungswesentlich ist, dass die erste Karkasseinlage vom jeweiligen Wulstbereich in einem ersten Karkasseinlagenhochschlag über die jeweilige Reifenseitenwand bis unter den Laufstreifen geführt ist und dort unter dem Laufstreifen in dem jeweiligen ersten Karkasseinlagenende endet. Gleichzeitig endet die zweite Karkasseinlage in ihren zweiten Karkasseinlagenenden radial innerhalb des Laufstreifens, insbesondere im jeweiligen Wulstbereich. Die zweite Karkasseinlage ist somit nicht vom jeweiligen Wulstbereich aus über die Reifenseitenwände bis unter den Laufstreifen geführt.

In beiden axialen Hälften des Reifens ist in einem Bereich der Seitenwand, insbesondere radial zwischen dem zweiten Karkasseinlagenende und dem jeweiligen Laufstreifenende des Laufstreifens, eine Verstärkung der Seitenwand durch drei Lagenstärken der Karkasse gegeben, wobei die erste Karkasseinlage zwei Lagenstärken und die zweite Karkasseinlage eine Lagenstärke beiträgt. Wesentlich ist, dass zudem die Seitenwände über ihre gesamte Erstreckung von den Wulstbereichen bis zum Laufstreifen zusätzlich durch die Schutzlage verstärkt sind. Sie schützt die Karkasse von axial außen. Die Schnittfestigkeit der Seitenwände und damit der Pannenschutz ist somit maßgeblich verbessert. Die Seitenwände werden aber nicht nur gegen Pannen besser geschützt, sondern durch die Schutzlage zusätzlich auch über ihre gesamte Höhe versteift. Die Versteifung, insbesondere durch die Schutzlage, führt zu einem erhöhten vorteilhaften Durchschlagsschutz des Reifens.

Die zusätzliche Verstärkung der Seitenwand führt zwar zu einem erhöhten Reibungsverlust und einem zusätzlichen Materialeinsatz im Bereich der Seitenwand. Allerdings ist der Zielkonflikt zwischen Pannensicherheit und Durchschlagsschutz der Seitenwand versus Rollwiderstand auf hohem Niveau zugunsten von Pannensicherheit und Durchschlagsschutz gelöst.

Durch die Anordnung der ersten Karkasseinlagenenden unter dem Laufstreifen sind diese gleichzeitig vor Ablösung geschützt. Dies verbessert die Haltbarkeit und die Pannensicherheit des Zweiradreifens weiter.

Die neue Konstruktion ermöglicht durch die zwei um den Kern herumgeschlagenen Karkasseinlagen sowohl einen weiterhin einfachen Reifenbau als auch einen vorteilhaften Schutz des Kerns vor Beschädigung, insbesondere im Vergleich zu einer Karkasse mit nur einer Karkasseinlage.

Es hat sich somit herausgestellt, dass ein Zweiradreifen, bevorzugt ein Fahrradreifen, besonders bevorzugt ein Rennradreifen und/oder ein Mountain-Bike Reifen, aufweisend die neue Konstruktion den Zielkonflikt aus Pannensicherheit, insbesondere Pannensicherheit der Seitenwand, und Rollwiderstand auf hohem Niveau zugunsten der Pannensicherheit löst.

Gleichzeitig verbessert die neuen Konstruktion die Luftdichtigkeit des Reifens weiter. Es ist keine direkte Verbindung eines Reifeninnenraums mit einem Reifenaußenraum durch eine der beiden Karkasseinlagen gegeben. Ebenso sind mit den zweiten Karkasseinlagenenden die dort endenden Festigkeitsträger der zweiten Karkasseinlage mit der Schutzlage von axial außen abgedeckt. Hierdurch ist ein Abblasen von Luft aus dem Reifeninnenraum durch die beiden Karkasseinlagen, insbesondere im schlauchlosen Betrieb, vermieden bzw. stark reduziert. Zusammen mit der Abdeckung der Karkasse über die gesamte Seitenwand durch die Schutzlage von axial außen ist somit eine verbesserte Luftdichtigkeit des auf der Felge montierten Reifens ermöglicht.

Ist eine Lage unter den Laufstreifen geführt und endet dort in einem Lagenende, so kann dieses Lagenende räumlich zwischen dem Laufstreifen und der zweiten Karkasseinlage sowie radial außerhalb und axial innerhalb der Laufstreifenenden des Laufstreifens angeordnet sein. Eine senkrecht zur zweiten Karkasseinlage ausgerichtete erste Gerade kann den Laufstreifen und das jeweilige Lagenende miteinander verbinden. Die Lage kann die erste Karkasslage mit dem ersten Karkasseinlagenende als Lagenende sein. Die Lage kann auch ein Schutzlagenteil der Schutzlage mit einem radial äußeren Schutzlagenteilende als Lagenende sein.

Im Wulstbereich dient die Schutzlage entsprechend eines Wulstschutzbandes wie üblich als Anscheuerungsschutz gegenüber einem Felgenhorn im Betrieb des Reifens und vermindert so ein Freilegen der Karkassfestigkeitsträger. Die Schutzlage kann eine als Anlagefläche zur Felge ausgelegte Außenfläche des Wulstbereichs mitbilden oder bilden.

Die erste Karkasseinlage und die zweite Karkasseinlage weisen jeweils wie üblich parallel zueinander verlaufende Festigkeitsträger auf, die in Gummimaterial eingebettet sind. Wie üblich können die Festigkeitsträger dabei einen Winkel von 40 Grad bis 60 Grad mit der Umlaufrichtung U einschließen. Die Festigkeitsträger der ersten Karkasseinlage und der zweiten Karkasseinlage können einen gegenläufigen Steigungswinkel aufweisen.

Im Folgenden werden vorteilhafte Weiterbildungen der Erfindung erläutert.

In einer vorteilhaften Ausführungsform der Erfindung ist vorgesehen, dass jedes erste Karkasseinlagenende jeweils in derjenigen axialen Hälfte des Reifens unter dem Laufstreifen angeordnet ist, in welcher die erste Karkasseinlage in dem ersten Karkasseinlagenhochschlag über die Reifenseitenwand bis unter den Laufstreifen zum jeweiligen ersten Karkasseinlagenende geführt ist.

Die beiden ersten Karkasseinlagenhochschläge überlappen somit im Zenit des Reifens nicht. Die ersten Karkasseinlagenenden sind jeweils in derselben axialen Hälfte wie der erste Karkasseinlagenhochschlag, der in dem jeweiligen ersten Karkasseinlagenende endet, angeordnet. Die ersten Karkasseinlagenhochschläge sind somit auf die jeweilige axiale Hälfte des Reifens begrenzt angeordnet. Axial zwischen den beiden ersten Karkasseinlagenenden der ersten Karkasseinlage erfolgt somit eine Verstärkung des Reifens durch die Karkasse durch genau zwei Lagenstärken der Karkasse.

Es ist somit ein Zweiradluftreifen zur Verfügung gestellt, der mit geringem Einsatz an Karkassmaterial, insbesondere im Zenit des Reifens, einen vorteilhaften Pannenschutz der Seitenwände gewährleistet. Ein solcher Reifen weist eine besonders geringen Rollwiderstand auf.

Insbesondere ist dabei jedes erste Karkasseinlagenende jeweils in derjenigen axialen Hälfte des Reifens unter einem Laufstreifenauslauf des Laufstreifens angeordnet, in welcher die erste Karkasseinlage in dem ersten Karkasseinlagenhochschlag über die Reifenseitenwand bis unter den Laufstreifen zum jeweiligen ersten Karkasseinlagenende geführt ist und in dem unter dem Laufstreifenauslauf angeordneten ersten Karkasseinlagenende endet.

Hierdurch ist der Rollwiderstand durch weiter verringerten Einsatz an einander überlappend angeordnetem Karkassmaterial optimiert. Gleichzeitig ist der Schnittschutz im Bereich der Seitenwände weiterhin gewährleistet und ein Schutz der ersten Karkasseinlagenenden vor Ablösung ermöglicht.

Die erste Karkasseinlage endet dann in den ersten Karkasseinlagenenden unter dem Laufstreifenauslauf. Die ersten Karkasseinlagenenden können somit jeweils räumlich zwischen dem Laufstreifenauslauf und der zweiten Karkasseinlage sowie radial außerhalb und axial innerhalb der Laufstreifenenden des Laufstreifens angeordnet sein. Eine senkrecht zur zweiten Karkasseinlage ausgerichtete erste Gerade kann den Laufstreifenauslauf und das erste Karkasseinlagenende miteinander verbinden.

Der Laufstreifenauslauf kann sich in jeder axialen Hälfte des Reifens vom jeweiligen Laufstreifenende aus maximal 10 mm, bevorzugt maximal 2 mm, nach axial innen erstrecken, gemessen entlang einer radial inneren Begrenzung des Laufstreifens.

In einer alternativen vorteilhaften Weiterbildung der Erfindung ist vorgesehen, dass die beiden ersten Karkasseinlagenhochschläge im Zenit des Reifens einander überlappend angeordnet sind.

Jeder der beiden ersten Karkasseinlagenhochschläge erstreckt sich von einem Wulstbereich in einer axialen Hälfte des Reifens bis unter den Laufstreifen und endet in dem jeweiligen ersten Karkasseinlagenende in der jeweils anderen axialen Hälfte des Reifens. Im Zenit des Reifens erfolgt somit eine Verstärkung des Reifens durch die Karkasse durch vier Lagenstärken der Karkasse, wobei die erste Karkasseinlage drei Lagenstärken beiträgt und die zweite Karkasseinlage eine Lagenstärke beiträgt.

Eine derartige Konstruktion kann sich zwar nachteilig auf den Rollwiderstand auswirken, allerdings ist der Schnittschutz des Reifens im Bereich des Laufstreifens stark verbessert, wodurch der Reifen eine weiter verbesserte Pannensicherheit aufweist. Dies ist insbesondere für Ganzjahresreifen und Trainingsreifen bei Rennradreifen von Bedeutung.

In einer vorteilhaften Weiterbildung der Erfindung ist vorgesehen, dass sich die Schutzlage einstückig von einem Wulstbereich über den Zenit bis zum anderen Wulstbereich der beiden Wulstbereiche erstreckt. Hierdurch ist bei einfacher Konstruktion ein zusätzlicher Pannenschutz im Zenit erwirkt.

In einer alternativen vorteilhaften Weiterbildung der Erfindung ist vorgesehen, dass die Schutzlage eine in zwei Schutzlagenteile geteilte Schutzlage ist, dass in jeder der beiden axialen Hälften ein Schutzlagenteil der zwei Schutzlagenteile vom Wulstbereich über die jeweilige Reifenseitenwand bis unter den Laufstreifen geführt ist und dort in der jeweiligen axialen Hälfte vor dem Zenit in einem radial äußeren Schutzlagenteilende endet.

Bevorzugt ist das radial äußere Schutzlagenteilende dabei maximal 3 mm axial innerhalb des Laufstreifenendes der jeweiligen axialen Hälfte angeordnet, gemessen vom Laufstreifenende entlang einer radial inneren Begrenzung des Laufstreifens.

Unabhängig von der Ausgestaltung der Schutzlage unter dem Laufstreifen ist es vorteilhaft, wenn sich die Schutzlage von den Seitenwänden her kommend in den Wulstbereichen bis maximal zu einem jeweiligen äußersten Umschlagpunkt einer Außenkante der um den Kern herumgeschlagenen Festigkeitsträger der zweiten Karkasslage erstreckt und dabei bevorzugt vor dem jeweiligen äußersten Umschlagpunkt in einer ersten Höhe von 0 mm bis 2 mm, gemessen relativ zu dem äußersten Umschlagpunkt, endet.

Zur Ermittlung einer Höhe im Wulstbereich, insbesondere der ersten Höhe oder einer unten genannten zweiten Höhe, kann der Zweiradluftreifen in seinem Querschnitt so aufgebogen sein, dass die beiden Karkasseinlagen vom Zenit her kommend im Bereich der Seitenwand weitgehend geradlinig angeordnet sind und in eine bezüglich des Kerns weitgehend symmetrische Umschlingung des Kerns übergehen. In dieser Anordnung ist die jeweilige Höhe gemessen relativ zu dem äußersten Umschlagpunkt der Außenkante der um den Kern herumgeschlagenen Festigkeitsträger der zweiten Karkasseinlage, gemessen parallel zu den weitgehend geradlinig angeordneten Karkasseinlagen. Die zweiten Karkasseinlagenenden können ebenso wie die ersten Karkasseinlagenenden und die Enden der Schutzlage durch die Enden der Festigkeitsträger, insbesondere durch eine Gewebekante, der jeweiligen Karkasseinlage oder Schutzlage, gegeben sein.

In einer vorteilhaften Weiterbildung der Erfindung ist vorgesehen, dass die zweite Karkasseinlage in ihren zweiten Karkasseinlagenenden im jeweiligen Wulstbereich, insbesondere vom Kern her kommend vor der jeweiligen Seitenwand, endet.

Durch diese niedrige Anordnung der zweiten Karkasseinlagenenden im Wulstbereich, insbesondere vom Kern her kommend vor der jeweiligen Seitenwand, sind die Umschläge der zweiten Karkasseinlagen vorrangig in einem Bereich angeordnet, der im Betrieb des Reifens kaum oder keine zyklische Deformation erfährt. Somit ist der Energieverlust durch Reibung der zweiten Karkasseinlage gering. Ebenso ist der Materialeinsatz für die zweite Karkasseinlage, und damit das Gewicht des Reifens, gering.

Entsprechende Vorteile ergeben sich, wenn die zweite Karkasseinlage in den zweiten Karkasseinlagenenden in einer zweiten Höhe von maximal 15 mm, bevorzugt von 10 mm bis 12 mm, endet, gemessen relativ zu dem äußersten Umschlagpunkt.

In einer bevorzugten Ausführungsform ist die Schutzlage als mit dem Gummimaterial gummiertes Gewebe ausgeführt, wobei das Gewebe die Festigkeitsträger aufweist. Das Gewebe kann ein Cordgewebe oder ein Kreuzgewebe sein. Eine besonders gute Luftdichtigkeit wird mit einem Kreuzgewebe aufweisend Monofilamente als Festigkeitsträger erreicht.

In einer vorteilhaften Ausführungsform weist das Gewebe eine Fadendichte von mindestens 100 epdm auf. Es kann sich um eine Nesselgewebe handeln.

In einer vorteilhaften Ausführungsform sind die Festigkeitsträger aus einem Polyester oder einem Polyamid, bevorzugt einem Polyamid 6, besonders bevorzugt einem Polyamid 6.6. In einer vorteilhaften Ausführungsform beträgt die Bruchkraft des einzelnen Festigkeitsträgers mindestens 15 N.

In einer weiteren vorteilhaften Weiterbildung der Erfindung ist vorgesehen, dass die Festigkeitsträger der Schutzlage Monofilamente, insbesondere Monofilamente eines Monofilamentgewebes, sind. Die Schutzlage weist also insbesondere ein mit der Gummimischung gummiertes Monofilamentgewebe auf, wobei das Monofilamentgewebe die als Monofilamente ausgebildeten Festigkeitsträger aufweist.

Die als Monofilamente ausgeführten Festigkeitsträger der Schutzlage, insbesondere das gummierte Monofilamentgewebe, vermindert das Entweichen von Luft an der Kontaktfläche zwischen Reifen und Felge besonders wirksam, insbesondere wirksamer als Festigkeitsträger aus mehreren miteinander verdrillten Fasern. Grund hierfür ist, dass die Monofilamente weitgehend einzeln in dem Gummimaterial der Schutzlage eingebettet sind und somit ein Abblasen von Luft durch Mikrokanäle zwischen den Fasern der Fäden weitgehend vermieden ist. Hierdurch ist eine besonders gute Luftdichtigkeit des auf einer Felge montierten Reifens ermöglicht. Vorteilhaft ist dies insbesondere für einen Schlauchlosreifen. Ein Betrieb des Reifens ohne Schlauch kann somit ohne weitere aufwändige, oftmals den Rollwiderstand verschlechternden Maßnahmen, wie z.B. einem Innerliner, ermöglicht sein. Weiter ermöglicht die verbesserte Luftdichtigkeit, dass der Schlauchlosreifen mit nur wenig oder keiner Dichtmilch gefahren wird.

In einer weiteren vorteilhaften Weiterbildung der Erfindung ist vorgesehen, dass das Gummimaterial der Schutzlage farbig oder weiß ist.

Da das Gummimaterial der Schutzlage die Performance des Reifens nur gering beeinflusst, kann hierfür auch ein farbiges oder weißes Gummimaterial gewählt werden. Da die Schutzlage die sichtbare Oberfläche des Reifens mitbildet, ist somit eine gezielte optische Ausgestaltung des Reifens ermöglicht.

In einer weiteren vorteilhaften Weiterbildung der Erfindung ist vorgesehen, dass die Karkasse in direktem Kontakt zu einem Reifeninnenraum steht. Hierdurch ist ein besonders leichter Reifen und damit ein vorteilhafter Rollwiderstand ermöglicht. Für einen Schlauchlosreifen, insbesondere einen "Tubeless" oder einen "Tubeless Ready" Fahrradreifen, kann eine ausreichende Luftdichtigkeit durch die beschriebenen Maßnahmen, insbesondere die Ausführung aufweisend ein Monofilamentgewebe, gewährleistet sein.

In einer weiteren vorteilhaften Weiterbildung der Erfindung ist vorgesehen, dass es sich um einen Schlauchlosreifen, insbesondere einen "tubeless" Reifen oder einen "Tubeless Ready" Reifen, handelt.

Schlauchlosreifen sind Reifen, die für einen schlauchlosen Betrieb des Reifens geeignet und vorgesehen sind. Schlauchlosreifen sind insbesondere Reifen im schlauchlosen Betrieb. Ein Reifen im schlauchlosen Betrieb ist ein Reifen, der auf einer Felge montiert ist und wobei der von dem Reifen und der Felge eingeschlossene Reifeninnenraum frei ist von einem Schlauch und wobei der Reifen derart betrieben wird. Schlauchlosreifen stellen eine erhöhte Anforderung an die Luftdichtigkeit sowohl des Reifens an sich als auch an die Abdichtung an der Kontaktfläche zwischen Reifen und Felge. Im schlauchlosen Betrieb des Schlauchlosreifens entfallen Reibungsverluste zwischen Schlauch und Reifen, so dass der Reifen einen vorteilhaften Rollwiderstand ermöglicht. Ebenfalls entfallen schlauchbasierte Pannengründe. Beim Betrieb eines Schlauchlosreifens im schlauchlosen Betrieb kann der Einsatz einer Dichtflüssigkeit, insbesondere einer Dichtmilch, die in den Reifeninnenraum zwischen Reifen und Felge verfüllt ist, die Dichtheit verbessern.

Ein Schlauchlosreifen kann ein sogenannter "Tubeless" Reifen sein, der vorrangig oder ausschließlich für den Betrieb ohne Schlauch geeignet und vorgesehen ist. Ein Tubeless Reifen kann oftmals auch ohne Dichtmilch gefahren werden.

Es kann sich bei dem Schlauchlosreifen auch um einen sogenannten "Tubeless Ready" Reifen handeln, der sowohl für den Betrieb mit als auch für den Betrieb ohne Schlauch geeignet und vorgesehen ist. In der Regel wird ein Tubeless Ready Reifen im schlauchlosen Betrieb mit einer Dichtflüssigkeit, insbesondere einer Dichtmilch, gefahren. Reifen und Felge können dabei so konstruiert sein, dass sie direkt aneinander abdichten.

Die Erfindung ist besonders vorteilhaft für Schlauchlosfahrradreifen, insbesondere Schlauchlosrennradreifen und/oder Schlauchlosmountainbikereifen.

In einer weiteren vorteilhaften Weiterbildung der Erfindung ist vorgesehen, dass es sich um einen Fahrradreifen geeignet und vorgesehen für einen Betrieb mit Schlauch, insbesondere um einen Clincher-Reifen, handelt. Ein Reifen in einem Betrieb mit Schlauch ist ein Reifen montiert auf einer Felge, wobei in einem vom Reifen und der Felge eingeschlossenen Reifeninnenraum ein weitgehend luftdicht ausgeführter Schlauch angeordnet ist. Bei einem Reifen im Betrieb mit Schlauch wird der Luftdruck über einen im Reifeninnenraum zwischen Reifen und Felge angeordneten weitgehend luftdicht ausgeführten Schlauch gehalten. Auch hierbei ermöglicht die neue Reifenkonstruktion einen vorteilhaft reduzierten Rollwiderstand.

Ein sogenannter Clincher-Reifen ist in der Regel ein Drahtreifen bzw. ein Faltreifen. Der Reifen besitzt dann einen Drahtkern bzw. einen Faltkern und wird mit dem Wulst am Felgenhorn der Felge eingehängt. Ein Clincher-Reifen ist mit einfachen Mitteln montierbar und demontierbar. Im Pannenfall kann somit der Schaden einfach behoben werden.

In einer weiteren vorteilhaften Weiterbildung der Erfindung ist vorgesehen, dass zwischen dem Laufstreifen und der Reifenkarkasse eine oder zwei Zwischenlagen angeordnet ist oder sind.

Zumindest eine Zwischenlage der einen oder zwei Zwischenlagen kann eine Gummieinlage sein.

Die Gummieinlage kann dabei aus einer harten Gummimischung gebildet sein, wobei die Gummieinlage insbesondere eine Materialdicke von maximal 6 mm aufweist, gemessen im Reifenzenit. Es kann sich um einen Gummi-Breaker handeln. Die harte Gummimischung kann eine Shore-Härte A von größer als 45 und einen Rebound-Wert von größer als 60 aufweisen, wodurch sie sich durch eine hohe Rissfestigkeit und eine hohe Bruchkraft auszeichnet. Sie dient als zusätzlicher Pannenschutz.

Die Gummieinlage kann dabei aber auch eine dämpfende Gummieinlage aus einem hochelastischen Kautschuk sein, wobei die dämpfende Gummieinlage insbesondere eine Materialdicke von 0,2 mm bis 1 mm aufweist, gemessen im Reifenzenit. Hierdurch ist durch eine Entkopplung der Gewebelagen ein höherer Fahrkomfort sowie ein besserer Rollwiderstand ermöglicht. Durch die spezielle Materialdicke von 0,2 mm bis 1 mm der dämpfenden Gummieinlage wird der Fahrkomfort des Fahrradreifens wesentlich verbessert, da sich der Fahrradreifen insgesamt besser dem Fahrbahnuntergrund anpassen kann. Weiter erhöht die zusätzliche Gummieinlage den Pannenschutz im Zenit.

Bevorzugt kann die dämpfende Gummieinlage aus einem hochelastischen Kautschuk mit einem Rebound-Materialwert zwischen 70 und 80 bestehen. Bei diesem Rebound-Materialwert wird ein optimaler Fahrkomfort erzielt, wobei gleichzeitig der Rollwiderstand des Reifens nicht erhöht wird.

Zumindest eine Zwischenlage der einen oder zwei Zwischenlagen kann ein insbesondere reißfestes gummiertes Gewebe, bevorzugt ein insbesondere reißfestes gummiertes Gewebe aufweisend Fasern aus Polyethylenterephthalat - Polyacrylat, sein.

Die Schutzlage gewährleistet einen optimalen Pannenschutz im Zenit für den Zweiradluftreifen, bevorzugt den Fahrradreifen, besonders bevorzugt den Rennradreifen oder den Mountain-Bike Reifen. Bei dem insbesondere reißfesten gummierte Gewebe aufweisend Fasern aus Polyethylenterephthalat - Polyacrylat kann es sich um ein gummiertes Gewebe handeln, das Vectranfasern aufweist oder daraus besteht.

Weist der Reifen zwei Zwischenlagen auf, so handelt es sich bevorzugt um das insbesondere reißfeste gummierte Gewebe sowie um eine der zwei genannten Gummieinlagen.

In einer weiteren vorteilhaften Weiterbildung der Erfindung ist vorgesehen, dass es sich um einen Fahrradreifen, insbesondere einen Rennradreifen, einen Mountain-Bike Reifen oder einen Reifen für ein Fahrrad aufweisend einen Elektromotor zum Antrieb des Fahrrads, handelt. Die neue Reifenkonstruktion eignet sich aber an sich für den Einsatz in allen Fahrradsegmenten.

Die neue Reifenkonstruktion lässt sich bei Rennradreifen, insbesondere als Schlauchlosreifen, besonders vorteilhaft einsetzen, da sie einen geringen Rollwiderstand aufweist. Ein Rennradreifen weist in der Regel eine maximale Reifenbreite von 35 mm auf und zeigt eine rennradspezifische geringe Profilierung des Laufstreifens.

Die neue Reifenkonstruktion, insbesondere für Schlauchlosreifen, eignet sich auch hervorragend für Mountain-Bike Reifen. Mountain-Bike Reifen weisen in der Regel eine Mindestreifenbreite von 35 mm, insbesondere 40 mm, sowie oftmals eine ausgeprägte Profilierung des Laufstreifens auf. Auch bei Mountain-Bike Reifen gewinnen Aspekte wie der Rollwiderstand einen immer höheren Stellenwert. Insbesondere kann ein schlauchloser Betrieb des Reifens von Vorteil sein, da sich dann die Pannenanfälligkeit verringert und ein solcher Reifen mit vergleichsweise niedrigerem Luftdruck gefahren werden kann.

Aufgrund des vorteilhaften Pannenschutzes und Durchschlagschutzes eignet sich der erfindungsgemäße Reifen insbesondere für Trainings-Rennradreifen sowie für Reifen, die besonders auf unebenen, Pannen und Durchschläge fördernden Böden gefahren werden, wie etwa Gravel-, Cross- und Mountain-Bike Reifen. Auch für Anwendungen im Bereich Cargo ergeben sich entsprechende Vorteile.

Die neue Reifenkonstruktion eignet sich hervorragend auch für den Einsatz an Fahrrädern aufweisend einen Elektromotor zum Antrieb des Fahrrads. Bei einem solchen Einsatz ist ein geringer Rollwiderstand vorteilhaft, da er die Reichweite des Fahrrades erhöht.

Es kann es sich dabei um einen Reifen für ein Elektrofahrrad handeln. Ein Reifen für ein Elektrofahrrad, insbesondere ein E-Bike oder ein S-Pedelec, kann die Prüfnorm "ECE-R75" erfüllen. Es kann sich um einen Reifen für ein Pedelec handeln, bei welchem der Antrieb nur beim Treten der Pedale, insbesondere bis zu einer Geschwindigkeit von 25 km/h, zumindest teilweise von dem Elektromotor unterstützt ist.

In einer weiteren vorteilhaften Weiterbildung der Erfindung ist vorgesehen, dass es sich um einen Motorradreifen, insbesondere um einen Elektroscooterreifen, handelt. Auch ein Motorradreifen oder ein Elektroscooterreifen aufweisend die neue Konstruktion kann über den vorteilhaften Rollwiderstand zu einer verbesserten Reichweite des Fahrzeuges beitragen.

Weitere Merkmale, Vorteile und Einzelheiten der Erfindung werden nun anhand der schematischen Zeichnungen, die Ausführungsbeispiele darstellen, sowie von Vergleichsdaten näher erläutert. Dabei zeigt die
Fig. 1 und 2: einen erfindungsgemäßen Zweiradluftreifen im Querschnitt;
Fig. 3: einen Ausschnitt eines Zweiradreifens im Querschnitt.

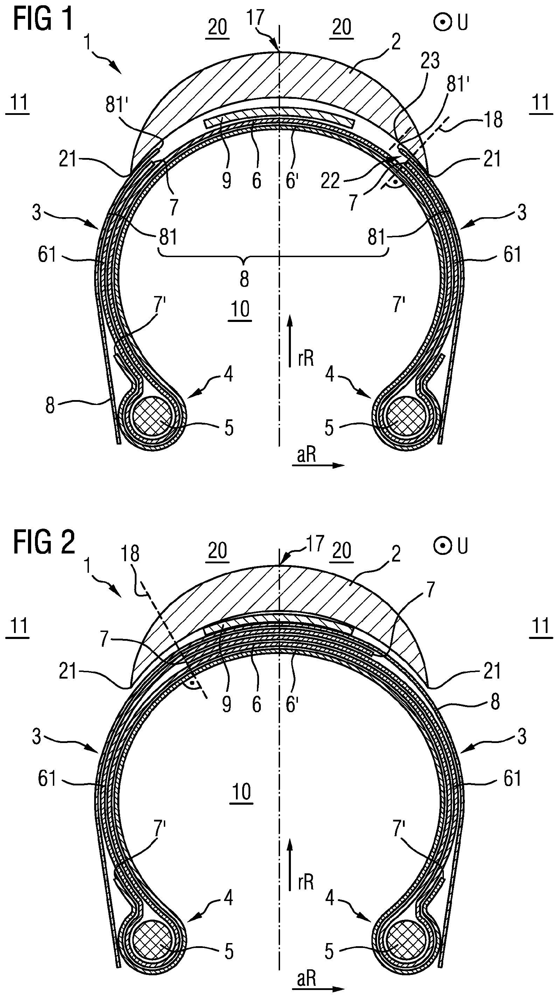

Die Figuren 1 und 2 zeigen jeweils die wesentlichen Reifenbauteile eines Zweiradreifens 1 in einer Querschnittansicht. Es handelt sich um einen Zweiradluftreifen 1, bevorzugt Fahrradreifen, besonders bevorzugt Rennradreifen oder Mountain-Bike Reifen, mit einem Laufstreifen 2, einer Reifenkarkasse, Reifenseitenwänden 3 und in einer jeden axialen Hälfte 20 des Reifens einem Wulstbereich 4 mit einem Reifenwulst mit einem Kern 5 wobei der Zweiradluftreifen 1 in den Wulstbereichen 4 eine axial außerhalb der Karkasse angeordnete Schutzlage 8 mit in Gummimaterial eingebetteten Festigkeitsträgern aufweist.

Die Reifenkarkasse ist aus einer ersten Karkasseinlage 6 und einer zweiten Karkasseinlage 6', jeweils aufweisend Festigkeitsträger, gebildet. Die Festigkeitsträger sind dabei in der Regel innerhalb der jeweiligen Karkasseinlage parallel zueinander und in einem Winkel zur Umlaufrichtung U von 40 Grad bis 60 Grad angeordnet. Die Festigkeitsträger der beiden Karkasseinlagen 6, 6' können einen gegenläufigen Steigungswinkel aufweisen. Der Reifen 1 kann zumindest bezüglich der Karkasseinlagen 6, 6', symmetrisch zueinander ausgebildet sein.

Die zweite Karkasseinlage 6' ist in einem Zenit 17 des Reifens 1 radial innerhalb der ersten Karkasseinlage 6 angeordnet. Sie erstreckt sich vom Zenit 17 des Zweiradluftreifens 1 über die Reifenseitenwände 3 bis in beide Wulstbereiche 4 und umschlingt dort den jeweiligen Kern 5 von axial innen nach axial außen und endet in einem zweiten Karkasseinlagenende 7' radial innerhalb des jeweiligen Laufstreifenendes 21, insbesondere wie dargestellt im jeweiligen Wulstbereich 4.

Die erste Karkasseinlage 6 erstreckt sich vom Zenit 17 des Reifens 1 über die Reifenseitenwände bis in beide Wulstbereiche 4 und umschlingt dort den jeweiligen Kern von axial innen nach axial außen.

Der Zweiradreifen zeichnet sich dadurch aus, die erste Karkasseinlage 6 vom jeweiligen Wulstbereich 4 in einem ersten Karkasseinlagenhochschlag 61 über die jeweilige Reifenseitenwand 3 bis unter den Laufstreifen 2 geführt ist und dort jeweils in einem ersten Karkasseinlagenende 7 endet und dass in jeder der beiden axialen Hälften 20 die Schutzlage 8 vom Wulstbereich 4 über die jeweilige Reifenseitenwand 3 bis unter den Laufstreifen 2 geführt ist.

Die erste Karkasseinlage 6 endet in den ersten Karkasseinlagenenden 7 unter dem Laufstreifen 2. Die ersten Karkasseinlagenenden 7 können somit jeweils räumlich zwischen dem Laufstreifen 2 und der zweiten Karkasseinlage 6' sowie radial außerhalb und axial innerhalb der Laufstreifenenden 21 des Laufstreifens angeordnet sein. Eine senkrecht zur zweiten Karkasseinlage 6' ausgerichtete erste Gerade 18 kann den Laufstreifen 2 und das erste Karkasseinlagenende 7 miteinander verbinden.

Die Schutzlage 8 bildet eine als Anlagefläche zur Felge ausgelegte Außenfläche des Wulstbereichs zumindest mit. Die Schutzlage bedeckt das jeweilige zweite Karkasseinlagenende 7' von axial außen.

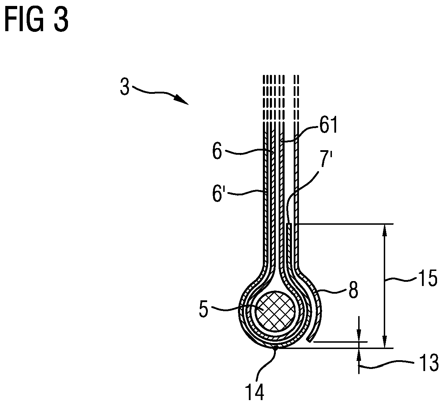

Die Schutzlage 8 erstreckt sich von den Seitenwänden 3 her kommend in den Wulstbereichen 4 bis maximal zu einem jeweiligen äußersten Umschlagpunkt 14 einer Außenkante der um den Kern herumgeschlagenen Festigkeitsträger der zweiten Karkasslage 6' und endet dabei vor dem jeweiligen äußersten Umschlagpunkt 14 in einer ersten Höhe 13 von 0 bis 2 mm, gemessen relativ zu dem äußersten Umschlagpunkt. Die Bemaßung der ersten Höhe 13 ist in Fig. 3 veranschaulicht.

Die zweite Karkasseinlage 6' endet in den zweiten Karkasseinlagenenden 7' im jeweiligen Wulstbereich 4, insbesondere vom Kern her kommend vor der jeweiligen Seitenwand 3. Die zweiten Karasseinlagenenden 7' der zweiten Karkasseinlage 6' können in einer zweiten Höhe 15 von maximal 15 mm, bevorzugt von 10 mm bis 12 mm, angeordnet sein, gemessen relativ zu dem äußersten Umschlagpunkt 14 . Eine Bemaßung der zweiten Höhe 15 ist in der Fig. 3 verdeutlicht.

In einer bevorzugten Ausführungsform ist die Schutzlage als mit dem Gummimaterial gummiertes Gewebe ausgeführt, wobei das Gewebe die Festigkeitsträger aufweist. Das Gewebe kann ein Cordgewebe oder ein Kreuzgewebe sein. Eine besonders gute Luftdichtigkeit wird mit einem Kreuzgewebe aufweisend Monofilamente als Festigkeitsträger erreicht. In einer vorteilhaften Ausführungsform weist das Gewebe eine Fadendichte von mindestens 100 epdm auf. Es kann sich um eine Nesselgewebe handeln. In einer vorteilhaften Ausführungsform sind die Festigkeitsträger aus einem Polyester oder einem Polyamid, bevorzugt einem Polyamid 6, besonders bevorzugt einem Polyamid 6.6. In einer vorteilhaften Ausführungsform beträgt die Bruchkraft des einzelnen Festigkeitsträgers mindestens 15 N.

Die Festigkeitsträger der Schutzlage 8 können Monofilamente, bevorzugt Monofilamente eines Monofilamentgewebes, sein.

Die Karkasse ist in direktem Kontakt zum Reifeninnenraum 10. Der Reifen 1 ist insbesondere frei von einem Innerliner. Erfindungsgemäße Vorteile können aber auch durch einen Reifen 1 erzielt werden, der eine weitere Schicht, insbesondere einen Innerliner, zwischen Reifeninnenraum 10 und Karkasse aufweist.

Zwischen dem Laufstreifen 2 und der Reifenkarkasse ist, wie dargestellt, als eine Zwischenlage 9 eine dämpfende Gummieinlage aus einem hochelastischen Kautschuk angeordnet, wobei die dämpfende Gummieinlage 9 insbesondere eine Materialdicke zwischen 0,2 mm und 1 mm aufweist, gemessen im Reifenzenit. Bevorzugt kann die dämpfende Gummieinlage aus einem hochelastischen Kautschuk mit einem Rebound-Materialwert zwischen 70 und 80 bestehen.

Die Zwischenlage 9 kann aber alternativ auch aus einer harten Gummimischung gebildet sein, wobei die Gummieinlage insbesondere eine Materialdicke von maximal 6 mm aufweist, gemessen im Reifenzenit. Es kann sich um einen Gummi-Breaker handeln. Die harte Gummimischung kann eine Shore-Härte A von größer als 45 und einen Rebound-Wert von größer als 60 aufweisen.

Zwischen dem Laufstreifen 2 und der Reifenkarkasse kann alternativ oder zusätzlich zur Gummieinlage eine Schutzlage nicht dargestellt als Zwischenlage aufweisend ein insbesondere reißfestes gummiertes Gewebe, bevorzugt ein gummiertes Gewebe aufweisend Fasern aus Polyethylenterephthalat - Polyacrylat, angeordnet sein.

Es handelt sich bei den dargestellten Reifen jeweils um einen Schlauchlosreifen, insbesondere einen "tubeless" Reifen oder einen "Tubeless Ready" Reifen. Der Reifen kann für den schlauchlosen Betrieb geeignet und vorgesehen sein und dafür genutzt werden. Aber auch ein Reifen für den Betrieb mit Schlauch, insbesondere ein Clincher-Reifen, kann eine vorteilhafte Konstruktion mit entsprechenden Merkmalen aufweisen.

Bei den dargestellten Reifen handelt es sich um einen Rennradreifen. Alternativ kann es sich aber auch um einen anderen Fahrradreifen, insbesondere um einen Mountain-Bike Reifen handeln. Aber auch andere Reifen, insbesondere Reifen für ein Fahrrad aufweisend einen Elektromotor zum Antrieb des Fahrrads, können entsprechend ausgeführt sein. Auch Motorradreifen, insbesondere Elektroscooterreifen, können die dargestellte vorteilhafte Konstruktion aufweisen.

Die Ausführungsformen der Figur 1 und Figur 2 unterscheiden sich in der Erstreckung der ersten Karkasseinlagenhochschläge 61 sowie der Ausführung der Schutzlage 8 unterhalb des Laufstreifens 2:
Die Figur 1 zeigt einen Reifen 1 mit einem besonders geringen Rollwiderstand.

Dabei ist jedes erste Karkasseinlagenende 7 jeweils in derjenigen axialen Hälfte 20 des Reifens 1 unter dem Laufstreifen 2, insbesondere wie dargestellt unter einem Laufstreifenauslauf 22 des Laufstreifens, angeordnet, in welcher die erste Karkasseinlage 6 in dem ersten Karkasseinlagenhochschlag 61 über die Reifenseitenwand 3 bis unter den Laufstreifen 2 zum jeweiligen ersten Karkasseinlagenende 7 geführt ist. Der Laufstreifenauslauf 22 erstreckt sich in der jeweiligen axialen Hälfte 20 des Reifens vom jeweiligen Laufstreifenende 21 aus maximal 10 mm, bevorzugt maximal 2 mm, nach axial innen bis zu einem axial inneren Laufstreifenauslaufende 23, gemessen entlang einer radial inneren Begrenzung des Laufstreifens.

Die beiden ersten Karkasseinlagenhochschläge 61 überlappen somit im Zenit 17 des Reifens 1 nicht. Die ersten Karkasseinlagenenden 7 sind jeweils in derselben axialen Hälfte 20 wie derjenige erste Karkasseinlagenhochschlag 61, der in dem jeweiligen ersten Karkasseinlagenende 7 endet, angeordnet. Die ersten Karkasseinlagenhochschläge 61 sind somit auf die jeweilige axiale Hälfte 20 des Reifens begrenzt angeordnet.

Die in der Fig. 1 dargestellte Schutzlage 8 ist eine in zwei Schutzlagenteile 81 geteilte Schutzlage, wobei in jeder der beiden axialen Hälften 20 ein Schutzlagenteil 81 der zwei Schutzlagenteile vom Wulstbereich 4 über die jeweilige Reifenseitenwand 3 bis unter den Laufstreifen 2 geführt ist und dort in der jeweiligen axialen Hälfte 20 vor dem Zenit 17 in einem radial äußeren Schutzlagenteilende 81' endet.

Die radial äußeren Schutzlagenteilenden 81' können somit jeweils räumlich zwischen dem Laufstreifen 2 und der zweiten Karkasseinlage 6' sowie radial außerhalb und axial innerhalb der Laufstreifenenden 21 des Laufstreifens angeordnet sein. Eine senkrecht zur zweiten Karkasseinlage 6' ausgerichtete erste Gerade kann den Laufstreifen 2 und das radial äußere Schutzlagenteilende 81' miteinander verbinden (nicht dargestellt).

Wie dargestellt kann das jeweilige radial äußere Schutzlagenteilende 81' dabei maximal 3 mm axial innerhalb des Laufstreifenendes 21 der jeweiligen axialen Hälfte 20 angeordnet sein, gemessen vom Laufstreifenende 21 entlang einer radial inneren Begrenzung des Laufstreifens.

Eine entsprechende Ausführung der Schutzlage 8 ist auch mit einem Reifen gemäß Fig. 2 kompatibel.

Die Figur 2 zeigt einen besonders pannensicheren Reifen 1. Im Gegensatz zu dem in der Figur 1 dargestellten Reifen sind die beiden ersten Karkasseinlagenhochschläge 7 im Zenit 17 des Reifens 1 einander überlappend angeordnet. Jeder der beiden ersten Karkasseinlagenhochschläge 61 erstreckt sich von einem Wulstbereich 4 in einer axialen Hälfte 20 des Reifens bis unter den Laufstreifen 2 und endet in dem jeweiligen ersten Karkasseinlagenende 7 in der jeweils anderen axialen Hälfte 20 des Reifens. Im Zenit 17 des Reifens erfolgt somit wie dargestellt eine Verstärkung des Reifens 1 durch vier Lagenstärken der Karkasse.

Die in der Fig. 2 dargestellte Schutzlage 8 erstreckt sich einstückig von einem Wulstbereich 4 über den Zenit 17 bis zum anderen Wulstbereich 4 der beiden Wulstbereiche 4. Diese Ausführung der Schutzlage 8 ist auch mit einem Reifen gemäß Fig. 1 kompatibel.

Die Fig. 3 verdeutlicht die Bemaßung der ersten Höhe 13 und der zweiten Höhe 15. Zur Ermittlung der ersten Höhe 13 und der zweiten Höhe 15 kann der Zweiradluftreifen 1 in seinem Querschnitt so aufgebogen sein, dass die beiden Karkasseinlagen 6,6' vom Zenit 17 her kommend im Bereich der Seitenwand 3 weitgehend geradlinig angeordnet sind und in eine bezüglich des Kerns 5 weitgehend symmetrische Umschlingung des Kerns 5 übergehen. Es kann sich dabei um einen Ausschnitt des Reifens der Fig. 1 oder der Fig. 2 handeln, wobei der Zweiradluftreifen 1 in seinem Querschnitt entsprechend aufgebogen ist. In dieser Anordnung sind die erste Höhe 13 und die zweite Höhe 15 gemessen relativ zum äußersten Umschlagpunkt 14 einer Außenkante der um den Kern 5 herumgeschlagenen Festigkeitsträger der zweiten Karkasseinlage 6' und gemessen parallel zu den im Bereich der Seitenwand 3 weitgehend geradlinig angeordneten Karkasseinlagen 6, 6'.

### Versuche

Es wurden Versuche mit drei unterschiedlichen Schlauchlosrennradreifen durchgeführt. Dabei wurde der erfindungsgemäße Reifen R1, ausgebildet gemäß Figur 1 ohne Zwischenlage 9, getestet. Weiter wurde ein weitgehend mit dem Reifen R1 baugleicher Referenzreifen RR2 getestet, jedoch im Gegensatz zum Reifen R1 anstatt der Schutzlage ein übliches Wulstschutzband aufweist, welches die zweiten Karkasslagenenden abdeckt und bereits im Wulstbereich endet. Weiter wurde als Referenzreifen RR3 ein handelsüblicher Rennradtubelessreifen mit genau einer Karkasseinlage getestet, wobei die Hochschläge der Karkasseinlage des Referenzreifens RR3 im Zenit einander überlappend angeordnet sind. Der Referenzreifen RR3 weist zudem für eine ausreichende Luftdichtheit einen Innerliner auf. Die Ergebnisse sind in der Tabelle 1 zusammengefasst.

**Tabelle 1**

| **Reifen** | **R1** | **RR2** | **RR3** |
|---|---|---|---|
| **Gewicht [g]** | 281 | 263 | 296 |
| **Rollwiderstand [W]** | 14,1 | 12,9 | 14,1 |
| **Schnittschutz Seitenwand [N]** | 498 | 452 | 346 |

Der Gewichtsunterschied der Reifen R1 und RR2 ist einzig auf die Schutzlage zurückzuführen. Der Reifen RR3 ist trotz einlagiger Karkasse aufgrund der Innerlinerschicht schwerer als die anderen Reifen.

Der Rollwiderstand wurde bei einem Maximaldruck von 7,5 bar und auf einer 19C Felge ohne Schlauch und Dichtmilch (Tubeless) gemessen. Hierbei zeigt sich der Einfluss von Energieverlust durch Reibung zwischen Lagen aufweisend Festigkeitsträger. Der Referenzreifen RR2 mit dem geringsten Einsatz an Material in der Seitenwand und dem geringsten Gewicht weist auch den geringsten Rollwiderstand auf. Der Reifen R1 mit der der Schutzlage in der Seitenwand weist einen Rollwiderstand vergleichbar mit dem Rollwiderstand des handelsüblichen Tubelessreifens RR3 mit einer einzigen Karkasslage auf.

Der Schnittschutz wurde mit Hilfe von Kraftmessungen beim Durchstich einer Klinge (vergleichbar mit Steinen auf der Fahrbahn) in der Seitenwand durchgeführt. Bei den Klingenmessungen kommt es bedeutend auf die Anzahl an verstärkenden Lagen an. Entsprechend ist der Schnittschutz im Bereich der Seitenwand des erfindungsgemäßen Reifens R1 um über 10% gegenüber dem Referenzreifen RR2 ohne Schutzlage in der Seitenwand und um über 40% gegenüber dem Referenzreifen RR3 mit nur einer Karkasslage verbessert.

Es zeigt sich somit, dass der erfindungsgemäße Reifen R1 den Zielkonflikt aus Pannensicherheit und Durchschlagschutz der Seitenwand, Luftdichtigkeit und Rollwiderstand hohem Niveau zugunsten der Pannensicherheit und des Durchschlagschutzes der Seitenwand löst.

### Bezugszeichenliste

- 1: Zweiradluftreifen
- 2: Laufstreifen
- 3: Seitenwand
- 4: Wulstbereich
- 5: Kern
- 6: erste Karkasseinlage
- 6': zweite Karkasseinlage
- 7: erstes Karkasseinlagenende
- 7': zweites Karkasseinlagenende
- 8: Schutzlage
- 9: Gummieinlage
- 10: Reifeninnenraum
- 11: Reifenaußenraum
- 13: erste Höhe
- 14: äußerster Umschlagpunkt
- 15: zweite Höhe
- 17: Zenit
- 18: erste Gerade
- 20: axiale Hälfte
- 21: Laufstreifenende
- 22: Laufstreifenauslauf
- 23: axial inneres Laufstreifenauslaufende
- 81: Schutzlagenteil
- 81': radial äußeres Schutzlagenteilende
- rR: radiale Richtung
- aR: axiale Richtung
- U: Umlaufrichtung

## Patentansprüche

1. Zweiradluftreifen (1), bevorzugt Fahrradreifen, besonders bevorzugt Rennradreifen und/oder Mountain-Bike Reifen, mit einem Laufstreifen (2), einer Reifenkarkasse, Reifenseitenwänden (3) und in einer jeden axialen Hälfte (20) des Reifens einem Wulstbereich (4) mit einem Reifenwulst mit einem Kern (5), wobei der Zweiradluftreifen (1) in den Wulstbereichen (4) eine axial außerhalb der Karkasse angeordnete Schutzlage (8) mit in Gummimaterial eingebetteten Festigkeitsträgern aufweist,
• wobei die Reifenkarkasse aus einer ersten Karkasseinlage (6) und einer zweiten Karkasseinlage (6') jeweils aufweisend Festigkeitsträger gebildet ist,
• wobei die zweite Karkasseinlage (6') in einem Zenit (17) des Zweiradluftreifens (1) radial innerhalb der ersten Karkasseinlage (6) angeordnet ist und sich vom Zenit (17) des Zweiradluftreifens (1) über die Reifenseitenwände (3) bis in beide Wulstbereiche (4) erstreckt und dort den jeweiligen Kern (5) von axial innen nach axial außen umschlingt und in einem zweiten Karkasseinlagenende (7') radial innerhalb eines Laufstreifenendes (21) des Laufstreifens endet,
• wobei sich die erste Karkasseinlage (6) vom Zenit (17) des Zweiradluftreifens (1) über die Reifenseitenwände (3) bis in beide Wulstbereiche (4) erstreckt und dort den jeweiligen Kern (5) von axial innen nach axial außen umschlingt, und
- wobei in jeder der beiden axialen Hälften (20) die Schutzlage (8) vom Wulstbereich (4) über die jeweilige Reifenseitenwand (3) bis unter den Laufstreifen (2) geführt ist,
**dadurch gekennzeichnet, dass**
• die erste Karkasseinlage (6) vom jeweiligen Wulstbereich (4) in einem ersten Karkasseinlagenhochschlag (61) über die jeweilige Reifenseitenwand (3) bis unter den Laufstreifen (2) geführt ist und dort jeweils in einem ersten Karkasseinlagenende (7) endet.

2. Zweiradluftreifen (1) nach Anspruch 1, **dadurch gekennzeichnet, dass** jedes erste Karkasseinlagenende (7) jeweils in derjenigen axialen Hälfte (20) des Reifens (1) unter dem Laufstreifen (2), insbesondere unter einem Laufstreifenauslauf (22) des Laufstreifens, angeordnet ist, in welcher die erste Karkasseinlage (6) in dem ersten Karkasseinlagenhochschlag (61) über die Reifenseitenwand (3) bis unter den Laufstreifen (2) zum jeweiligen ersten Karkasseinlagenende (7) geführt ist.

3. Zweiradluftreifen (1) nach Anspruch 1, **dadurch gekennzeichnet, dass** die beiden ersten Karkasseinlagenhochschläge (7) im Zenit (17) des Reifens (1) einander überlappend angeordnet sind.

4. Zweiradluftreifen (1) nach zumindest einem der Ansprüche 1, 2 oder 3, **dadurch gekennzeichnet, dass** sich die Schutzlage (8) einstückig von einem Wulstbereich (4) über den Zenit (17) bis zum anderen Wulstbereich (4) der beiden Wulstbereiche erstreckt.

5. Zweiradluftreifen (1) nach zumindest einem Ansprüche 1, 2 oder 3, **dadurch gekennzeichnet, dass** die Schutzlage (8) eine in zwei Schutzlagenteile (81) geteilte Schutzlage ist, dass in jeder der beiden axialen Hälften (20) ein Schutzlagenteil (81) der zwei Schutzlagenteile vom Wulstbereich (4) über die jeweilige Reifenseitenwand (3) bis unter den Laufstreifen (2) geführt ist und dort in der jeweiligen axialen Hälfte (20) vor dem Zenit (17) in einem radial äußeren Schutzlagenteilende (81') endet.

6. Zweiradluftreifen (1) nach zumindest einem der vorhergehenden Ansprüche, **dadurch gekennzeichnet, dass** sich die Schutzlage (8) von den Seitenwänden (3) her kommend in den Wulstbereichen (4) bis maximal zu einem jeweiligen äußersten Umschlagpunkt (14) einer Außenkante der um den Kern herumgeschlagenen Festigkeitsträger der zweiten Karkasslage erstreckt und dabei bevorzugt vor dem jeweiligen äußersten Umschlagpunkt (14) in einer ersten Höhe (13) von 0 bis 2 mm, gemessen relativ zu dem äußersten Umschlagpunkt, endet.

7. Zweiradluftreifen (1) nach zumindest einem der vorhergehenden Ansprüche, **dadurch gekennzeichnet, dass** die Schutzlage (8) als mit dem Gummimaterial gummiertes Gewebe, bevorzugt als gummiertes Cordgewebe oder als gummiertes Kreuzgewebe, aufweisend die Festigkeitsträger ausgeführt ist.

8. Zweiradluftreifen (1) nach zumindest einem der vorhergehenden Ansprüche, **dadurch gekennzeichnet, dass** die Festigkeitsträger der Schutzlage (8) Monofilamente, bevorzugt Monofilamente eines Monofilamentgewebes, sind.

9. Zweiradluftreifen (1) nach zumindest einem der vorhergehenden Ansprüche, **dadurch gekennzeichnet, dass** die Schutzlage eine farbige Gummierung oder eine weiße Gummierung aufweist.

10. Zweiradluftreifen (1) nach zumindest einem der vorhergehenden Ansprüche, **dadurch gekennzeichnet, dass**
die Karkasse in direktem Kontakt zu einem Reifeninnenraum (10) steht.

11. Zweiradluftreifen (1) nach zumindest einem der vorhergehenden Ansprüche, **dadurch gekennzeichnet, dass**
es sich um einen Schlauchlosfahrradreifen (1), insbesondere einen "tubeless" Reifen oder einen "Tubeless Ready" Reifen, handelt.

12. Zweiradluftreifen (1) nach zumindest einem der vorhergehenden Ansprüche, **dadurch gekennzeichnet, dass**
es sich um einen Fahrradreifen (1) für einen Betrieb mit Schlauch, insbesondere um einen Clincher-Reifen, handelt.

13. Zweiradluftreifen (1) nach zumindest einem der vorhergehenden Ansprüche, **dadurch gekennzeichnet, dass**
zwischen dem Laufstreifen (2) und der Reifenkarkasse eine oder mehrere Zwischenlagen (9) angeordnet sind, wobei die jeweilige Zwischenlage aus einem reißfesten, gummierten Gewebe oder aus einer Gummieinlage (9) besteht.

14. Zweiradluftreifen (1) nach zumindest einem der vorhergehenden Ansprüche, **dadurch gekennzeichnet, dass**
es sich um einen Fahrradreifen (1), insbesondere um einen Rennradreifen (1), einen Mountain-Bike Reifen oder einen Reifen für ein Fahrrad aufweisend einen Elektromotor zum Antrieb des Fahrrads, handelt.

## Claims

1. Two-wheeler pneumatic tyre (1), preferably a bicycle tyre, particularly preferably a racing bike tyre and/or a mountain bike tyre, having a tread (2), a tyre carcass, tyre sidewalls (3), and in each axial half (20) of the tyre a bead region (4) having a tyre bead with a core (5), wherein the two-wheeler pneumatic tyre (1) has in the bead regions (4) a protective layer (8) which is disposed axially outside the carcass and has strength members embedded in rubber material;
• wherein the tyre carcass is formed from a first carcass ply (6) and a second carcass ply (6'), each having strength members;
• wherein the second carcass ply (6') is disposed in a vertex (17) of the two-wheeler pneumatic tyre (1) radially within the first carcass ply (6), and extends from the vertex (17) of the two-wheeler pneumatic tyre (1) over the tyre sidewalls (3) into both bead regions (4), and in the latter wraps the respective core (5) from axially inside to axially outside, and ends in a second carcass ply end (7') radially within a tread end (21) of the tread;
• wherein the first carcass ply (6) extends from the vertex (17) of the two-wheeler pneumatic tyre (1) over the tyre sidewalls (3) into both bead regions (4), and in the latter wraps the respective core (5) from axially inside to axially outside; and
- wherein the protective layer (8) in each of the two axial halves (20) is guided from the bead region (4) over the respective tyre sidewall (3) to below the tread (2),
**characterized in that**
• the first carcass ply (6) is guided from the respective bead region (4) in a first carcass ply turn-up (61) over the respective tyre sidewall (3) to below the tread (2), and at the latter ends in each case in a first carcass ply end (7).

2. Two-wheeler pneumatic tyre (1) according to Claim 1, **characterized in that** each first carcass ply end (7) is in each case disposed below the tread (2), in particular below a tread runout (22) of the tread, **in that** axial half (20) of the tyre (1) in which the first carcass ply (6) is guided in the first carcass ply turn-up (61) over the tyre sidewall (3) to below the tread (2) and to the respective first carcass ply end (7).

3. Two-wheeler pneumatic tyre (1) according to Claim 1, **characterized in that** the two first carcass ply turn-ups (7) in the vertex (17) of the tyre (1) are disposed so as to overlap one another.

4. Two-wheeler pneumatic tyre (1) according to at least one of Claims 1, 2, and 3, **characterized in that** the protective layer (8) extends integrally from one bead region (4) over the vertex (17) to the other bead region (4) of the two bead regions.

5. Two-wheeler pneumatic tyre (1) according to at least one of Claims 1, 2, and 3, **characterized in that** the protective layer (8) is a protective layer divided into two protective layer parts (81); **in that** in each of the two axial halves (20) a protective layer part (81) of the two protective layer parts is guided from the bead region (4) over the respective tyre sidewall (3) to below the tread (2), and at the latter, in the respective axial half (20), ends in front of the vertex (17) in a radially outer protective layer part end (81').

6. Two-wheeler pneumatic tyre (1) according to at least one of the preceding claims, **characterized in that** the protective layer (8), emanating from the sidewalls (3), in the bead regions (4) extends at most to a respective outermost reversal point (14) of an external edge of the strength members of the second carcass ply that are folded about the core, and herein preferably ends in front of the respective outermost reversal point (14) at a first height (13) of 0 to 2 mm, measured relative to the outermost reversal point.

7. Two-wheeler pneumatic tyre (1) according to at least one of the preceding claims, **characterized in that** the protective layer (8) is embodied as a woven fabric rubberized with the rubber material, preferably as a rubberized woven cord fabric or as a rubberized cross-woven fabric, comprising the strength members.

8. Two-wheeler pneumatic tyre (1) according to at least one of the preceding claims, **characterized in that** the strength members of the protective layer (8) are monofilaments, preferably monofilaments of a woven monofilament fabric.

9. Two-wheeler pneumatic tyre (1) according to at least one of the preceding claims, **characterized in that** the protective layer has a coloured rubber coating or a white rubber coating.

10. Two-wheeler pneumatic tyre (1) according to at least one of the preceding claims, **characterized in that**
the carcass is in direct contact with a tyre interior (10).

11. Two-wheeler pneumatic tyre (1) according to at least one of the preceding claims, **characterized in that**
said two-wheeler pneumatic tyre is a tubeless bicycle tyre (1), in particular a "tubeless" tyre or a "tubeless ready" tyre.

12. Two-wheeler pneumatic tyre (1) according to at least one of the preceding claims, **characterized in that**
said two-wheeler pneumatic tyre is a bicycle tyre (1) for operation with a tube, in particular a clincher tyre.

13. Two-wheeler pneumatic tyre (1) according to at least one of the preceding claims, **characterized in that**
disposed between the tread (2) and the tyre carcass are one or a plurality of intermediate layers (9), wherein the respective intermediate layer consists of a tear-resistant, rubberized woven fabric or of a rubber insert (9).

14. Two-wheeler pneumatic tyre (1) according to at least one of the preceding claims, **characterized in that**
said two-wheeler pneumatic tyre is a bicycle tyre (1), in particular a racing bike tyre (1), a mountain bike tyre, or a tyre for a bicycle having an electric motor for powering the bicycle.

## Revendications

1. Pneu de deux-roues (1), de préférence pneu de vélo, de manière particulièrement préférée pneu de vélo de course et/ou pneu de vélo tout terrain, comprenant une bande de roulement (2), une carcasse de pneu, des flancs de pneu (3) et dans chaque moitié axiale (20) du pneu une zone de talon (4) munie d'un talon avec un noyau (5), dans lequel le pneu de deux-roues (1) présente dans les zones de talon (4) une couche de protection (8) disposée axialement à l'extérieur de la carcasse avec des renforts incorporés dans un matériau caoutchouteux,
• dans lequel la carcasse de pneu est formée à partir d'un premier insert de carcasse (6) et d'un deuxième insert de carcasse (6') présentant respectivement des renforts,
• dans lequel le deuxième insert de carcasse (6') est disposé au zénith (17) du pneu de deux-roues (1) radialement à l'intérieur du premier insert de carcasse (6) et s'étend du zénith (17) du pneu de deux-roues (1) via les flancs de pneu (3) jusque dans les deux zones de talon (4) et y enlace le noyau (5) respectif d'axialement à l'intérieur vers axialement à l'extérieur et se termine par une deuxième extrémité d'insert de carcasse (7') radialement à l'intérieur d'une extrémité de bande de roulement (21) de la bande de roulement,
• dans lequel le premier insert de carcasse (6) s'étend du zénith (17) du pneu de deux-roues (1) via les flancs de pneu (3) jusque dans les deux zones de talon (4) et y enlace le noyau (5) respectif d'axialement à l'intérieur vers axialement à l'extérieur, et
- dans lequel, dans chacune des deux moitiés axiales (20), la couche de protection (8) est guidée de la zone de talon (4) via le flanc de pneu (3) respectif jusque sous la bande de roulement (2),
**caractérisé en ce que**
• le premier insert de carcasse (6) est guidé de la zone de talon (4) respective dans une première remontée d'insert de carcasse (61) via le flanc de pneu (3) respectif jusque sous la bande de roulement (2) et s'y termine respectivement par une première extrémité d'insert de carcasse (7).

2. Pneu de deux-roues (1) selon la revendication 1, **caractérisé en ce que** chaque première extrémité d'insert de carcasse (7) est disposée respectivement dans la moitié axiale (20) du pneu (1) sous la bande de roulement (2), en particulier sous une sortie de bande de roulement (22) de la bande de roulement, dans laquelle est guidé le premier insert de carcasse (6) dans la première remontée d'insert de carcasse (61) via le flanc de pneu (3) jusque sous la bande de roulement (2) vers la première extrémité d'insert de carcasse (7) respective.

3. Pneu de deux-roues (1) selon la revendication 1, **caractérisé en ce que** les deux premières remontées d'insert de carcasse (7) sont disposées au zénith (17) du pneu (1) en se chevauchant mutuellement.

4. Pneu de deux-roues (1) selon au moins l'une des revendications 1, 2 ou 3, **caractérisé en ce que** la couche de protection (8) s'étend d'un seul tenant d'une zone de talon (4) via le zénith (17) jusqu'à l'autre zone de talon (4) des deux zones de talon.

5. Pneu de deux-roues (1) selon au moins l'une des revendications 1, 2 ou 3, **caractérisé en ce que** la couche de protection (8) est une couche de protection divisée en deux parties de couche de protection (81), **en ce que** dans chacune des deux moitiés axiales (20), une partie de couche de protection (81) des deux parties de couche de protection est guidée de la zone de talon (4) via le flanc de pneu (3) respectif jusque sous la bande de roulement (2) et s'y termine dans la moitié axiale (20) respective avant le zénith (17) par une extrémité de partie de couche de protection (81') radialement extérieure.

6. Pneu de deux-roues (1) selon au moins l'une des revendications précédentes, **caractérisé en ce que** la couche de protection (8), en partant des zones de talon (3), s'étend dans les zones de talon (4) au maximum jusqu'à un point de retournement extrême (14) respectif d'un bord extérieur des renforts de la deuxième nappe de carcasse, repliés autour du noyau, et se termine alors de préférence avant le point de retournement extrême (14) respectif à une première hauteur (13) de 0 à 2 mm, mesurée par rapport au point de retournement extrême.

7. Pneu de deux-roues (1) selon au moins l'une des revendications précédentes, **caractérisé en ce que** la couche de protection (8) est réalisée sous la forme d'un tissu caoutchouté, de préférence d'un tissu de corde caoutchouté ou d'un tissu croisé caoutchouté, présentant les renforts.

8. Pneu de deux-roues (1) selon au moins l'une des revendications précédentes, **caractérisé en ce que** les renforts de la couche de protection (8) sont des monofilaments, de préférence des monofilaments d'un tissu monofilament.

9. Pneu de deux-roues (1) selon au moins l'une des revendications précédentes, **caractérisé en ce que** la couche de protection présente un caoutchoutage de couleur ou un caoutchoutage blanc.

10. Pneu de deux-roues (1) selon au moins l'une des revendications précédentes, **caractérisé en ce**
**que** la carcasse est en contact direct avec l'espace intérieur du pneu (10).

11. Pneu de deux-roues (1) selon au moins l'une des revendications précédentes, **caractérisé en ce**
**qu'**il s'agit d'un pneu de vélo sans chambre à air (1), en particulier d'un pneu « tubeless » ou d'un pneu « tubeless ready ».

12. Pneu de deux-roues (1) selon au moins l'une des revendications précédentes, **caractérisé en ce**
**qu'**il s'agit d'un pneu de vélo (1) destiné à être utilisé avec une chambre à air, en particulier d'un pneu Clincher.

13. Pneu de deux-roues (1) selon au moins l'une des revendications précédentes, **caractérisé en ce**
**qu'**entre la bande de roulement (2) et la carcasse de pneu, une ou plusieurs couches intermédiaires (9) sont disposées, la couche intermédiaire respective étant composée d'un tissu caoutchouté résistant à la rupture ou d'une couche de caoutchouc (9).

14. Pneu de deux-roues (1) selon au moins l'une des revendications précédentes, **caractérisé en ce**
**qu'**il s'agit d'un pneu de vélo (1), en particulier d'un pneu de vélo de course (1), d'un pneu de vélo tout terrain ou d'un pneu pour un vélo présentant un moteur électrique pour l'entraînement du vélo.
